(19) Europäisches Patentamt
European Patent Office
Office européen des brevets

(11) **EP 3 111 061 B1**

(12) **EUROPÄISCHE PATENTSCHRIFT**

(45) Veröffentlichungstag und Bekanntmachung des Hinweises auf die Patenterteilung:
**05.09.2018   Patentblatt 2018/36**

(51) Int Cl.:
*F01N 3/10* (2006.01)     *F01N 9/00* (2006.01)
*F01N 11/00* (2006.01)    *F01N 3/023* (2006.01)

(21) Anmeldenummer: **14766113.6**

(22) Anmeldetag: **11.09.2014**

(86) Internationale Anmeldenummer:
**PCT/EP2014/002458**

(87) Internationale Veröffentlichungsnummer:
**WO 2015/127949 (03.09.2015 Gazette 2015/35)**

(54) **VERFAHREN ZUR ALTERUNGSBESTIMMUNG EINES OXIDATIONSKATALYSATORS IN EINEM ABGASNACHBEHANDLUNGSSYSTEM EINER BRENNKRAFTMASCHINE, VERFAHREN ZUR ASCHEERKENNUNG IN EINEM PARTIKELFILTER EINES ABGASNACHBEHANDLUNGSSYSTEMS, STEUEREINRICHTUNG UND BRENNKRAFTMASCHINE**

METHOD FOR DETERMINING THE AGING OF AN OXIDATION CATALYST IN AN EXHAUST GAS AFTERTREATMENT SYSTEM OF AN INTERNAL COMBUSTION ENGINE, METHOD FOR DETECTING ASH IN A PARTICLE FILTER OF AN EXHAUST GAS AFTERTREATMENT SYSTEM, CONTROL DEVICE, AND INTERNAL COMBUSTION ENGINE

PROCÉDÉ POUR LA DÉTERMINATION DU VIEILLISSEMENT D'UN CATALYSEUR D'OXYDATION DANS UN SYSTÈME DE POST-TRAITEMENT DE GAZ D'ÉCHAPPEMENT D'UN MOTEUR À COMBUSTION INTERNE, PROCÉDÉ POUR LA DÉTECTION DE CENDRES DANS UN FILTRE À PARTICULES D'UN SYSTÈME DE POST-TRAITEMENT DE GAZ D'ÉCHAPPEMENT, DISPOSITIF DE COMMANDE ET MOTEUR À COMBUSTION INTERNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.02.2014   DE 102014203621**

(43) Veröffentlichungstag der Anmeldung:
**04.01.2017   Patentblatt 2017/01**

(73) Patentinhaber: **MTU Friedrichshafen GmbH**
**88045 Friedrichshafen (DE)**

(72) Erfinder:
• **MALETIC, Boban**
**88046 Friedrichshafen (DE)**
• **FAST, Gerald**
**88677 Markdorf (DE)**

• **NIEMEYER, Jens**
**88045 Friedrichshafen (DE)**
• **SPÄDER, Tim**
**88085 Langenargen (DE)**
• **MÜLLER, Ralf**
**88693 Deggenhausertal (DE)**

(74) Vertreter: **Gleiss & Grosse**
**Patentanwälte Rechtsanwälte**
**Leitzstrasse 45**
**70469 Stuttgart (DE)**

(56) Entgegenhaltungen:
**WO-A1-2008/133694      WO-A1-2010/034403**
**WO-A1-2013/165302      WO-A1-2013/185862**
**DE-A1-102008 027 575   JP-A- 2011 185 132**
**US-A1- 2011 219 746**

**Beschreibung**

Die Erfindung betrifft ein Verfahren zur Altersbestimmung eines Oxidationskatalysators in einem Abgasnachbehandlungssystem einer Brennkraftmaschine mit den Merkmalen des Anspruchs 1, ein Verfahren zur Ascheerkennung in einem Partikelfilter eines Abgasnachbehandlungssystems einer Brennkraftmaschine mit den Merkmalen des Anspruchs 9, eine Steuereinrichtung gemäß Anspruch 13, und eine Brennkraftmaschine gemäß Anspruch 14.

Abgasnachbehandlungssysteme für Brennkraftmaschinen weisen typischerweise einen Partikelfilter auf, der vorgesehen ist, um das von der Brennkraftmaschine ausgestoßene Abgas von Rußpartikeln zu reinigen. Über eine Differenzdruckmessung eines über dem Partikelfilter abfallenden Differenzdrucks wird anhand eines Beladungsmodells eine Beladung des Partikelfilters bestimmt. Reicht eine passive Regeneration des Partikelfilters durch Stickstoffdioxid im Abgas, beispielsweise bei längerem Betrieb der Brennkraftmaschine im Schwachlastbereich oder Leerlauf, nicht aus, wird - insbesondere in Abhängigkeit von der festgestellten Beladung - eine aktive Regeneration des Partikelfilters durchgeführt, bei welcher die Rußpartikel oxidiert werden. Es zeigt sich, dass das Differenzdruckniveau über dem Partikelfilter im Laufe der Lebensdauer des Abgasnachbehandlungssystems langsam ansteigt. Dieser Anstieg resultiert aus zwei voneinander unabhängigen Effekten: Zum einen lagert sich in dem Partikelfilter zunehmend Asche ab, also Bestandteile, die nicht verbrannt werden können, sondern vielmehr dauerhaft in dem Partikelfilter verbleiben und das Differenzdruckniveau erhöhen, indem sie den Partikelfilter zusetzen; zum anderen führt eine Alterung eines - in Richtung des Abgasstroms gesehen - stromaufwärts des Partikelfilters angeordneten Oxidationskatalysators dazu, dass in geringerem Maße Stickstoffdioxid in dem Abgas gebildet wird. Dieses wird typischerweise in dem Partikelfilter als Oxidationsmittel verwendet, um Rußpartikel auch in Betriebszuständen der Brennkraftmaschine oxidieren zu können, in denen die Abgastemperatur nicht ausreicht, um eine Oxidation durch die im Abgas verbleibende Rest-Sauerstoffkonzentration zu bewirken. Die mit steigender Alterung des Oxidationskatalysators abnehmende Stickstoffdioxidkonzentration führt demnach zu einer verminderten Regeneration, sodass das Differenzdruckniveau dadurch ansteigt, dass der Partikelfilter nicht mehr in gleichem Maße regeneriert wird wie im Neuzustand des Oxidationskatalysators.

Diese beiden Effekte, nämlich die zunehmende Veraschung des Partikelfilters einerseits und die Alterung des Oxidationskatalysators andererseits, können über eine Differenzdruckmessung alleine nicht voneinander separiert werden. Es kann also prinzipiell nicht anhand der Entwicklung des Differenzdrucks für sich genommen festgestellt werden, ob lediglich eine zunehmende Veraschung des Partikelfilters vorliegt, oder ob zugleich auch der Oxidationskatalysator Alterungseffekte zeigt. Somit ist aber auch nur eine unzureichende Korrektur des Beladungsmodells in Hinblick auf den Anstieg des Differenzdruckniveaus möglich, weil keine Unterscheidung der Beiträge der beiden Effekte zu dem Differenzdruckanstieg möglich ist. Um stets zuverlässig die Beladung des Partikelfilters mit Rußpartikeln bestimmen zu können, muss jedoch zum einen der Grad der Veraschung des Partikelfilters und zum anderen auch dessen Regeneration in dem Beladungsmodell berücksichtigt werden.

Herkömmliche Verfahren zur Ascheerkennung werden in Betriebspunkten der Brennkraftmaschine durchgeführt, in denen die Alterung des Oxidationskatalysators keinen Effekt auf die Rußabbrandrate im Partikelfilter hat, also typischerweise bei Nennleistung der Brennkraftmaschine und bei hoher Abgastemperatur, bei welcher die Rußpartikel durch die Rest-Sauerstoffkonzentration im Abgas oxidiert werden. Es ist offensichtlich, dass auf diese Weise keinerlei Informationen über die Alterung des Oxidationskatalysators erhalten werden können, weil diese sich in den betrachteten Betriebspunkten nicht auf die Rußabbrandrate auswirkt. Eine Anpassung des Beladungsmodells an das langsam ansteigende Differenzdruckniveau bleibt daher notwendig ungenau. In WO 2013/185862 A1 wird die Regeneration des Partikelfilters in Abhängigkeit von wenigstens einem, eine Alterung des Oxidationskatalysators charakterisierenden Alterungswert durchgeführt. Alternativ oder zusätzlich wird als der den Alterungszustand charakterisierende Alterungswert ein eine dem Oxidationskatalysator zugeordnete Aktivität zur Bildung von Stickstoffdioxid im Abgas charakterisierender Aktivitätswert verwendet. WO 2008/133694 A1 offenbart die passive Regeneration des Partikelfilters mittels in einem stromaufwärtigen Oxidationskatalysator gebildeten Stickstoffdioxids (NOx) in einem Temperaturfenster von 250°C bis 450°C. Der Erfindung liegt die Aufgabe zugrunde, ein Verfahren zur Alterungsbestimmung eines Oxidationskatalysators zu schaffen, sodass die genannten Nachteile nicht auftreten. Weiterhin liegt der Erfindung die Aufgabe zugrunde, ein Verfahren zur Ascheerkennung in einem Partikelfilter zu schaffen, wobei die genannten Nachteile nicht auftreten, und wobei insbesondere unterschieden werden kann zwischen dem Effekt einer Veraschung des Partikelfilters einerseits und dem Effekt einer Alterung des Oxidationskatalysators andererseits. Weiterhin liegt der Erfindung die Aufgabe zugrunde, eine Steuereinrichtung und eine Brennkraftmaschine zu schaffen, bei welchen die genannten Nachteile ebenfalls nicht auftreten.

Die Aufgabe wird gelöst, indem ein Verfahren zur Alterungsbestimmung eines Oxidationskatalysators in einem Abgasnachbehandlungssystem einer Brennkraftmaschine mit den Merkmalen des Anspruchs 1 geschaffen wird. Dieses weist folgende Schritte auf: Es wird eine Rußabbrandrate eines Partikelfilters des Abgasnachbehandlungssystems ermittelt. An die ermittelte Rußabbrandrate wird eine Funktion mit wenigstens einem Anpassungsparameter in Abhängigkeit von wenigstens einer Größe angepasst, wobei für die Betrachtung der Rußabbrandrate in Abhängigkeit von der Größe ein Wert des Anpassungsparameters von einer Alterung des Oxidationskatalysators abhängig ist, wobei eine Abgastemperatur im Partikelfilter in einem Temperaturbereich zwischen 150 °C bis 500 °C liegt. Eine Alterung des Oxidationskatalysators wird bestimmt anhand des durch Anpassen der Funktion ermittelten Werts des wenigstens einen Anpassungsparameters. Dabei ist erkannt worden, dass die Rußabbrandrate, mithin die Regenerationsrate des Partikelfilters, zur Bestimmung der Alterung des Oxidationskatalysators herangezogen werden kann, wenn diese in Abhängigkeit von einer Größe betrachtet wird, für welche ein Wert eines Anpassungsparameters einer anzupassenden Funktion von einer Alterung des Oxidationskatalysators abhängig ist. Die Rußabbrandrate aufgetragen gegen die Größe ergibt also - mathematisch formuliert - eine Funktion, die parametrisch von der Alterung des Oxidationskatalysators abhängt. Hierzu wird die Rußabbrandrate vorzugsweise in einem Betriebspunkt oder Betriebsbereich der Brennkraftmaschine ermittelt, in welchem ein solcher parametrischer Zusammenhang gegeben ist. Da sich die Veraschung nicht auf die Rußabbrandrate auswirkt, wobei diese vielmehr nur parametrisch von dem Alterungszustand des Oxidationskatalysators abhängt, ist es auf diese Weise möglich, dessen Alterung zu bestimmen. Damit ist eine Separation der zuvor beschriebenen Effekte möglich, was wiederum zu einer verbesserten Ascheerkennung und einer besseren Anpassung des Beladungsmodells an den tatsächlich vorliegenden Zustand des Abgasnachbehandlungssystems führt. Die Alterungsbestimmung kann auch herangezogen werden, um den Oxidationskatalysator bedarfsabhängig zu tauschen. Hierdurch entfällt ein ansonsten vorgesehener präventiver Tausch, was Kostenvorteile, insbesondere reduzierte Wartungskosten, mit sich bringt.

Das Verfahren wird bevorzugt durchgeführt für ein Abgasnachbehandlungssystem, bei welchem ein Partikelfilter stromabwärts eines Oxidationskatalysators angeordnet ist, sodass ein in dem Oxidationskatalysator erzeugtes Oxidationsmittel, insbesondere Stickstoffdioxid, zur Regeneration des Partikelfilters verwendet werden kann. Alternativ oder zusätzlich wird das Verfahren bevorzugt durchgeführt für ein Abgasnachbehandlungssystem, welches bei dem der Partikelfilter katalytisch - mit einem Oxidationskatalysator-Material - beschichtet ist. In diesem Fall kann auf einen Oxidationskatalysator stromaufwärts des Partikelfilters verzichtet werden.

Der Begriff "Oxidationskatalysator" bezeichnet demnach allgemein hier und im Folgenden allgemein eine Einrichtung zur Katalyse von Oxidationsreaktionen im Abgas, insbesondere einen separaten Oxidationskatalysator und/oder eine entsprechende katalytische Beschichtung eines Elements des Abgasnachbehandlungssystems, insbesondere des Partikelfilters.

Es wird eine Ausführungsform des Verfahrens bevorzugt, die sich dadurch auszeichnet, dass die Alterung des Oxidationskatalysators bestimmt wird, indem der wenigstens eine Anpassungsparameter mit wenigstens einem vorherbestimmten Kennwert verglichen wird. Weist die anzupassende Funktion nur einen Anpassungsparameter auf, wird dieser vorzugsweise mit einem Schwell- oder Grenzwert verglichen. Es ist möglich, dass eine Vielzahl von Schwell- oder Grenzwerten hinterlegt ist, wobei jeder einzelne Schwell- oder Grenzwert für ein bestimmtes Alterungsniveau des Oxidationskatalysators charakteristisch ist, sodass - abhängig von der konkreten Zahl und Dichte der Schwell- oder Grenzwerte - eine sehr genaue Bestimmung des Alters des Oxidationskatalysators möglich ist. Wird eine Funktion verwendet, die mehr als einen Anpassungsparameter aufweist, werden diese vorzugsweise mit in einem Kennfeld hinterlegten Parametersätzen verglichen, um die Alterung des Oxidationskatalysators zu bestimmen. Bevorzugt sind die Schwell- oder Grenzwerte beziehungsweise ist das Kennfeld für ein bestimmtes Abgasnachbehandlungssystem beziehungsweise für eine bestimmte Brennkraftmaschine fest implementiert beziehungsweise hinterlegt, besonders bevorzugt in einer zur Durchführung des Verfahrens eingerichteten Steuereinrichtung, beispielsweise in einem Steuergerät der Brennkraftmaschine.

Es wird auch eine Ausführungsform des Verfahrens bevorzugt, die sich dadurch auszeichnet, dass die Funktion an die Rußabbrandrate in Abhängigkeit von einer Temperatur des Partikelfilters und von einer Stickoxid-Konzentration im Abgas angepasst wird. Die Rußabbrandrate wird in diesem Fall also in Abhängigkeit von der Temperatur des Partikelfilters einerseits und der Stickoxid-Konzentration im Abgas andererseits betrachtet, und die Funktion wird durch Variation des wenigstens einen Anpassungsparameters hieran angepasst. Es ist nämlich erkannt worden, dass die Rußabbrandrate in einem Temperaturbereich, in welchem eine Regeneration des Partikelfilters im Wesentlichen oder sogar vollständig durch Oxidation von Ruß mittels Stickstoffdioxid als Reduktionsmittel erfolgt, wobei der Temperaturbereich vorzugsweise von mindestens 250 °C bis höchstens 450 °C reicht, von dem Alterungszustand des Oxidationskatalysators abhängt. Die Rußabbrandrate ist dabei zum einen abhängig von der Temperatur im Partikelfilter, insbesondere von der Temperatur des Abgases im Partikelfilter, und zum anderen von der Stickoxid-Konzentration im Abgas, wobei durch diese festgelegt ist, wieviel Stickstoffdioxid maximal als Reduktionsmittel zur Verfügung stehen kann. Dabei ist hier und im Folgenden mit dem Begriff "Stickoxid-Konzentration" stets die Gesamt-Stickoxid-Konzentration als Summe der Konzentration von Stickstoffmonoxid und Stickstoffdioxid angesprochen. Zu berücksichtigen ist, dass das von der Brennkraftmaschine stromaufwärts des Oxidationskatalysators produzierte Stickoxid nahezu ausschließlich aus Stickstoffmonoxid besteht, welches in dem Oxidationskatalysator - insbesondere abhängig von dessen Alterungszustand - zu Stickstoffdioxid oxidiert wird. Bevorzugt verwendete Stickoxid-Sensoren messen nur die Gesamt-Stickoxid-Konzentration. Betrachtet man nun die Rußabbrandrate einerseits abhängig von der Temperatur und andererseits in Abhängigkeit von der Stickoxid-Konzentration, so zeigt sich, dass diese parametrisch von dem Anteil des Stickstoffdioxids an der Stickoxid-Konzentration abhängt, der seinerseits wieder abhängig von dem Alterungszustand des Oxidationskatalysators ist. Daher ist es durch Anpassen der Funktion unter Variation des wenigstens einen Anpassungsparameters möglich, eine Information über die Alterung des Oxidationskatalysators zu erhalten. In dem gealterten Oxidationskatalysator verläuft nämlich die Oxidation des Stickstoffmonoxids zu Stickstoffdioxid mit reduzierter Effizienz, sodass dieser weniger Stickstoffdioxid produziert als ein Oxidationskatalysator im Neuzustand. Insgesamt nimmt die Stickstoffdioxid-Produktion in dem Oxidationskatalysator also mit dessen zunehmender Lebensdauer ab. Dies lässt sich ohne weiteres anhand des wenigstens einen Anpassungsparameters nachvollziehen.

Es wird auch eine Ausführungsform des Verfahrens bevorzugt, die sich dadurch auszeichnet, dass eine lineare Funktion an die Rußabbrandrate angepasst wird. Alternativ oder zusätzlich ist es möglich, dass ein Polynom zweiten Grades oder ein Polynom dritten Grades an die Rußabbrandrate angepasst wird. Wird eine lineare Funktion an die Rußabbrandrate angepasst, weist diese genau einen Anpassungsparameter auf. Ein Polynom zweiten Grades weist zwei Anpassungsparameter auf. Schließlich weist ein Polynom dritten Grades drei Anpassungsparameter auf. Alternativ oder zusätzlich ist es auch möglich, ein Polynom höheren Grades an die Rußabbrandrate anzupassen, welches dann entsprechend mehr Anpassungsparameter aufweist. Bezüglich der Abhängigkeit der Rußabbrandrate von der Temperatur ist festzustellen, dass diese typischerweise gut durch ein Polynom dritten Grades beschrieben werden kann. Es ist aber auch möglich, dass ein Polynom zweiten Grades oder sogar eine lineare Funktion für eine hinreichend genaue Beschreibung ausreicht. Die Rußabbrandrate ist von der Stickoxid-Konzentration typischerweise linear abhängig. Bei den hier genannten Funktionen handelt es sich durchgängig um sehr einfache Funktionen, die auch einfach an die Rußabbrandrate - vorzugsweise mithilfe der Methode der kleinsten Fehlerquadrate - anpassbar sind. Dies ist sehr schnell und unter Einsatz von geringer Rechenleistung möglich. Dabei liefern die genannten Funktionen zugleich eine ausreichend hohe Genauigkeit, sodass es keiner komplizierteren Funktionen bedarf, die in der Anpassung zeitaufwendiger und auch aufwendiger bezüglich der Rechenleistung wären.

Die Temperatur des Partikelfilters wird vorzugsweise durch Messung ermittelt. Besonders bevorzugt ist ein erster Temperatursensor stromaufwärts des Partikelfilters vorgesehen, wobei ein zweiter Temperatursensor stromabwärts des Partikelfilters vorgesehen ist. Die Temperatur des Partikelfilters wird dann als Mittelwert aus den beiden Temperaturmessungen stromauf- und stromabwärts desselben berechnet. Die Temperaturmessung kann alternativ mittels eines Temperatursensors erfolgen, der unmittelbar die Temperatur in dem Partikelfilter misst und hierfür in geeigneter Weise an dem Partikelfilter angeordnet ist. Die Stickoxid-Konzentration wird - wie bereits angedeutet - vorzugsweise durch einen Stickoxid-Sensor ermittelt, der bevorzugt unmittelbar stromabwärts der Brennkraftmaschine und vorzugsweise noch stromaufwärts des Oxidationskatalysators angeordnet ist. Alternativ kann die Stickoxid-Konzentration aus einem Kennfeld ermittelt werden, insbesondere in Abhängigkeit von wenigstens einem Betriebsparameter der Brennkraftmaschine.

Es wird auch eine Ausführungsform des Verfahrens bevorzugt, die sich dadurch auszeichnet, dass die Rußabbrandrate durch folgende Schritte ermittelt wird: Es wird ein über dem Partikelfilter abfallender Differenzdruck ermittelt. Anhand eines Beladungsmodells wird eine Beladung des Partikelfilters aus dem Differenzdruck ermittelt. Weiterhin wird ein Rußeintrag - insbesondere eine Rußeintragsrate - in den Partikelfilter ermittelt. Schließlich wird die Rußabbrandrate aus der Beladung und dem Rußeintrag ermittelt. Auf diese Weise ist es zugleich einfach und genau möglich, die Rußabbrandrate zu ermitteln.

Der Differenzdruck über dem Partikelfilter wird vorzugsweise mittels eines Differenzdrucksensors gemessen, wobei eine erste Messstelle des Differenzdrucksensors unmittelbar stromaufwärts des Partikelfilter und eine zweite Messstelle unmittelbar stromabwärts desselben angeordnet ist. Alternativ ist es möglich, dass der Differenzdruck als Differenz von Messwerten zweier Drucksensoren berechnet wird, wobei ein erster Drucksensor unmittelbar stromaufwärts des Partikelfilters angeordnet ist, und wobei ein zweiter Drucksensor unmittelbar stromabwärts des Partikelfilters angeordnet wird. Die Differenz der Messwerte des ersten und zweiten Sensors liefert dann in analoger Weise zu der Messung mittels des Differenzdrucksensors den gewünschten, über dem Partikelfilter abfallenden Differenzdruck.

Die Beladung des Partikelfilters wird bevorzugt zeitabhängig anhand des Beladungsmodells ermittelt. Das Beladungsmodell ist vorzugsweise aschekorrigiert, also insbesondere an einen momentanen Veraschungszustand des Partikelfilters angepasst. Auf diese Weise ist das Beladungsmodell eingerichtet, um stets mit möglichst hoher Genauigkeit eine Beladung des Partikelfilters mit Rußpartikeln aus dem Differenzdruck berechnen zu können, ohne dass hier aschebedingte Fehler auftreten.

Der Rußeintrag in den Partikelfilter wird vorzugsweise als Rußeintragsrate aus wenigstens einem Betriebsparameter der Brennkraftmaschine berechnet. Dabei wird wenigstens ein Betriebsparameter herangezogen, der charakteristisch ist für Bedingungen in einem Brennraum der Brennkraftmaschine, die für die Rußbildung relevant sind. Bevorzugt wird ein Betriebsparameter verwendet ausgewählt aus einer Gruppe bestehend aus einer Brennstoffeinspritzmenge, einem Einspritzzeitpunkt, einem Messwert einer Lambdasonde, einer Abgasrückführrate, einer Drosselklappenstellung, und einer Drehzahl der Brennkraftmaschine. Die Rußeintragsrate wird dabei bevorzugt in einer Steuereinrichtung berechnet oder anhand eines oder mehrerer Kennfelder bestimmt, wobei die Steuereinrichtung zur Durchführung des Verfahrens eingerichtet ist. Besonders bevorzugt wird die Rußeintragsrate in dem Steuergerät der Brennkraftmaschine berechnet. Dabei wird auf ein Modell zurückgegriffen, welches die Rußeintragsrate in Abhängigkeit von dem wenigstens einen Betriebsparameter der Brennkraftmaschine beschreibt. Bevorzugt wird eine Mehrzahl von Betriebsparametern herangezogen, um die Rußeintragsrate zu berechnen.

Es zeigt sich, dass die Rußeintragsrate bevorzugt unabhängig von dem Differenzdruck über dem Partikelfilter berechnet wird. Hierdurch werden nämlich die Beladung des Partikelfilters einerseits und die Rußeintragsrate andererseits unabhängig voneinander mittels zweier verschiedener, unabhängiger Modelle bestimmt.

Die zeitliche Entwicklung der Beladung des Partikelfilters hängt zum einen von der Rußeintragsrate und zum anderen von der Rußabbrandrate ab. Insbesondere ergibt sich die Ableitung der Beladung nach der Zeit als Summe aus der Rußeintragsrate und der Rußabbrandrate. Es ist daher möglich, die Rußabbrandrate aus der Beladung des Partikelfilters einerseits und der Rußeintragsrate andererseits zu berechnen. Sind dabei die Beladung und die Rußeintragsrate anhand unabhängiger Modelle bestimmt worden, ergibt sich eine sehr genaue Berechnung der Rußabbrandrate, weil nicht auf redundante, sondern vielmehr auf komplementäre Informationen zurückgegriffen wird.

Es wird eine Ausführungsform des Verfahrens bevorzugt, die sich dadurch auszeichnet, dass die Rußabbrandrate mithilfe eines Kalman-Filters berechnet wird. Ein Kalman-Filter stellt eine besonders elegante Möglichkeit dar, mit geringer Rechenleistung und vorzugsweise in Echtzeit die Rußabbrandrate aus der Beladung einerseits und der Rußeintragsrate andererseits zu berechnen. Dabei gehen in den Kalman-Filter bevorzugt neben der Beladung des Partikelfilters sowie der Rußeintragsrate auch die ungefilterten Messwerte des Differenzdrucks über dem Partikelfilter ein. Zusätzlich zu der Rußabbrandrate erhält man in diesem Fall aus dem Kalman-Filter noch einen gefilterten Verlauf des Differenzdrucks, sowie eine aus dem gefilterten Differenzdruckverlauf bestimmte, gefilterte Beladung des Partikelfilters. Weiterhin geht in den Kalman-Filter vorzugsweise wenigstens ein Fehlerschätzwert ein, der eine Fehlerkorrektur in dem Kalman-Filter ermöglicht. Dabei wird für den Fehlerschätzwert insbesondere berücksichtigt, ob ein transienter Betrieb der Brennkraftmaschine vorliegt, in welchem die Druckdifferenzwerte gegebenenfalls nicht aussagekräftig sind, ob ein zulässiger Auswertebereich der eingehenden Messwerte, insbesondere der eingehenden Differenzdruckwerte, vorliegt, und/oder inwieweit nicht unabhängiges Messrauschen gegeben ist. In den Fehlerschätzwert des Kalman-Filters geht bevorzugt insbesondere ein Fehler der Differenzdruckmessung ein, der vom Betriebspunkt der Brennkraftmaschine abhängt. Wird anhand des Fehlerschätzwerts festgestellt, dass anhand der in den Kalman-Filter eingehenden Größen momentan keine zuverlässige Berechnung der Rußabbrandrate möglich ist, wird hier vorzugsweise eine Extrapolation der bisher berechneten Rußabbrandrate durchgeführt. Dies ist in dem Kalman-Filter ohne weiteres möglich, weil dieser insoweit auf interne Zustände zurückgreifen kann, wobei die aktuell eingehenden Werte zeitweise nicht berücksichtigt werden. Auf diese Weise ist ohne weiteres mithilfe des Kalman-Filters eine Fehlerkorrektur möglich.

Alternativ wird eine Ausführungsform des Verfahrens bevorzugt, bei welcher die Rußabbrandrate durch Rückwärtsintegration der Beladung und der Rußeintragsrate berechnet wird. Dies erfordert gegebenenfalls weniger Rechenleistung als der Kalman-Filter, allerdings ist dafür kaum eine Fehlerkorrektur möglich.

Es wird auch eine Ausführungsform des Verfahrens bevorzugt, die sich dadurch auszeichnet, dass eine zeitliche Entwicklung der Rußabbrandrate ausgewertet wird. Anhand der zeitlichen Entwicklung wird eine Fehlererkennung durchgeführt. Hierdurch ist es möglich, verschiedene Fehlerzustände von einer im Regelfall auftretenden, langsamen Alterung des Oxidationskatalysators zu unterscheiden. Beispielsweise ist es möglich, eine plötzliche Änderung der Rußabbrandrate zu identifizieren, woraus auf eine Zerstörung oder Entfernung des Oxidationskatalysators, oder auf einen Sensordefekt geschlossen werden kann. Dabei ist es möglich, die spezifische Form der Änderung der Rußabbrandrate zur Identifikation eines spezifischen Fehlers heranzuziehen. Im Regelfall sollte sich dagegen eine langsame, stetige Änderung der Rußabbrandrate durch die herkömmliche thermische Alterung und/oder Vergiftung des Oxidationskatalysators ergeben.

Besonders bevorzugt wird eine Ausführungsform des Verfahrens, die sich dadurch auszeichnet, dass als zeitliche Entwicklung der Rußabbrandrate die zeitliche Entwicklung des wenigstens einen Anpassungsparameters ausgewertet wird. Diese Vorgehensweise zeichnet sich durch einen besonders geringen Rechenaufwand aus, da nur eine geringe Zahl von Daten, gegebenenfalls sogar nur die zeitliche Entwicklung eines einzigen Parameterwerts, betrachtet werden muss. Es ist so auf sehr einfache Weise möglich, plötzlich auftretende Fehlerzustände von der normalen, langsamen Alterung des Oxidationskatalysators zu unterscheiden.

Die Aufgabe wird auch gelöst, indem ein Verfahren zur Ascheerkennung in einem Partikelfilter eines Abgasnachbehandlungssystems mit den Schritten des Anspruchs 9 geschaffen wird. Dabei wird ein über dem Partikelfilter abfallender Differenzdruck erfasst. Dies erfolgt vorzugsweise durch einen Differenzdrucksensor oder durch zwei Sensoren, von denen ein erster stromaufwärts und ein zweiter stromabwärts des Partikelfilters angeordnet ist, wobei als Differenzdruck eine Differenz der Messwerte der beiden Sensoren gebildet wird, wie dies bereits oben näher beschrieben wurde. Eine Alterung eines Oxidationskatalysators des Abgasnachbehandlungssystems wird mit einer Ausführungsform des zuvor beschriebenen Verfahrens bestimmt. Ein Beladungsmodell für den Partikelfilter wird an die Alterung des Oxidationskatalysators angepasst. Dies schließt ein, dass keine Anpassung des Beladungsmodells erfolgt, wenn festgestellt wird, dass der Oxidationskatalysator nicht oder nicht weiter gealtert ist. Im Übrigen ist es möglich, dass bei einer initialen Durchführung des Verfahrens unter Verwendung eines neuwertigen Oxidationskatalysators die Bestimmung der Alterung desselben nicht über das zuvor beschriebene Verfahren durchgeführt wird, sondern dass vielmehr das Verfahren zunächst mit einem Wert initialisiert wird, der einer fehlenden Alterung des Oxidationskatalysators entspricht.

In nachfolgenden Durchläufen des Verfahrens wird allerdings eine Alterungsbestimmung wie zuvor beschrieben durchgeführt. Es wird eine Beladung des Partikelfilters anhand des korrigierten Beladungsmodells - welches gegebenenfalls ein nicht verändertes Beladungsmodell bei fehlender Alterung des Oxidationskatalysators einschließt - bestimmt. Schließlich wird aus der Beladung einerseits und dem Differenzdruck andererseits eine Veraschung des Partikelfilters festgestellt. Dadurch, dass das Beladungsmodell nunmehr auf die Alterung des Oxidationskatalysators angepasst werden kann, ist es möglich, diesen Effekt explizit zu berücksichtigen und daher von dem Effekt der Veraschung des Partikelfilters zu separieren. Diese kann ohne weiteres bestimmt werden, weil nach der Korrektur des Beladungsmodells bezüglich der Alterung des Oxidationskatalysators eine noch verbleibende Abweichung zwischen den errechneten Beladungswerten und den eigentlich anhand der Differenzdruckwerte zu erwartenden Beladungswerten auf eine Veraschung des Partikelfilters zurückzuführen ist.

Es wird eine Ausführungsform des Verfahrens bevorzugt, die sich dadurch auszeichnet, dass das Beladungsmodell - insbesondere im Anschluss an die Bestimmung der Veraschung des Partikelfilters - an dessen Veraschung angepasst wird. Das Beladungsmodell ist dann sowohl bezüglich der Alterung des Oxidationskatalysators als auch bezüglich der Veraschung des Partikelfilters korrigiert, sodass sehr genaue Beladungswerte für den Partikelfilter mithilfe des Beladungsmodells berechnet werden können.

Die Anpassung des Beladungsmodells an die Alterung des Oxidationskatalysators und/oder an die Veraschung des Partikelfilters erfolgt bevorzugt derart, dass die gemessenen Differenzdruckwerte abhängig von der Alterung und/oder der Veraschung korrigiert und dann in korrigierter Form der Beladungsberechnung durch das Beladungsmodell zugrunde gelegt werden. Alternativ oder zusätzlich ist es möglich, dass ein im Rahmen des Beladungsmodells verwendeter Sollwert oder ein Kennfeld für den Differenzdruck an die Alterung des Oxidationskatalysators und/oder die Veraschung des Partikelfilters angepasst wird. Weiter alternativ oder zusätzlich ist es möglich, dass ein im Rahmen des Beladungsmodells verwendeter funktionaler Zusammenhang zwischen der Beladung des Partikelfilters und dem Differenzdruck an die Alterung des Oxidationskatalysators und/oder die Veraschung des Partikelfilters angepasst wird.

Es wird auch eine Ausführungsform des Verfahrens bevorzugt, die sich dadurch auszeichnet, dass dieses mit einem Initialwert für die Veraschung initialisiert wird. Dabei ist es bevorzugt möglich, dass in einem Neuzustand des Partikelfilters und/oder des Abgasnachbehandlungssystems ein Initialwert verwendet wird, der für eine nicht vorhandene beziehungsweise fehlende Veraschung charakteristisch ist, beispielsweise der Wert 0. Alternativ oder zusätzlich ist es möglich, dass die Veraschung insbesondere zur Initialisierung des Verfahrens gemäß einem bekannten Ascheerkennungsalgorithmus bestimmt wird, insbesondere in einem Betriebspunkt, in dem sich eine Alterung des Oxidationskatalysators nicht auswirkt, bevorzugt bei Nennlast der Brennkraftmaschine und einer Abgastemperatur, bei welcher der Partikelfilter vollständig durch den Rest-Sauerstoffgehalt des Abgases regeneriert wird. Auf diese Weise kann die Veraschungserkennung - insbesondere zur Initialisierung des Verfahrens - wenigstens einmalig unabhängig von der Bestimmung der Alterung des Oxidationskatalysators durchgeführt werden.

Es wird auch eine Ausführungsform des Verfahrens bevorzugt, bei welcher wiederkehrend, bevorzugt regelmäßig, die Veraschung gemäß der zuvor beschriebenen, bekannten Ascheerkennungsmethode bestimmt wird. Der so erhaltene Wert für die Veraschung des Partikelfilters wird dann zur Fehlerkorrektur oder zu einer Anpassung des erfindungsgemäßen Ascheerkennungsverfahrens verwendet.

Schließlich wird eine Ausführungsform des Verfahrens bevorzugt, bei welcher das Verfahren iterativ durchgeführt wird. Besonders bevorzugt läuft das Verfahren zur Ascheerkennung stets während des Betriebs der Brennkraftmaschine fortlaufend ab, sodass fortlaufend die Alterung des Oxidationskatalysators und die Veraschung des Partikelfilters bestimmt werden. Dementsprechend wird auch das Beladungsmodell fortlaufend auf die Alterung des Oxidationskatalysators und die Veraschung des Partikelfilters angepasst. Somit stehen stets genaue, aktuelle Werte für die Beladung des Partikelfilters zur Verfügung. Alternativ ist es möglich, dass das Verfahren mit zeitlichen Unterbrechungen, vorzugsweise in vorherbestimmten Zeitabständen, durchgeführt wird. In diesem Fall wird das Beladungsmodell bevorzugt zu vorherbestimmten Zeiten an die Veraschung des Partikelfilters und die Alterung des Oxidationskatalysators angepasst. Dabei fällt weniger Rechenaufwand an, als wenn das Verfahren fortlaufend durchgeführt wird. Insoweit ist diese Ausführungsform des Verfahrens ökonomisch und weniger rechenintensiv. Die vorherbestimmten Zeitabstände werden bevorzugt so gewählt, dass trotz der nur punktuellen Durchführung des Verfahrens hinreichend genaue Beladungswerte mithilfe des korrigierten Beladungsmodells gewährleistet sind.

Die Aufgabe wird schließlich auch gelöst, indem eine Steuereinrichtung geschaffen wird, welche eingerichtet ist zur Durchführung eines Verfahrens nach einem der Ansprüche 1 bis 8 und/oder zur Durchführung eines Verfahrens nach einem der Ansprüche 9 bis 12. In Zusammenhang mit der Vorrichtung verwirklichen sich die Vorteile, die bereits in Zusammenhang mit den Verfahren erläutert wurden.

Vorzugsweise ist die Steuereinrichtung als Steuergerät einer Brennkraftmaschine (Engine Control Unit - ECU) ausgebildet. Alternativ ist es möglich, dass die Steuereinrichtung als separate Steuereinrichtung ausgebildet ist, die insbesondere eigens zur Durchführung der Alterungsbestimmung und/oder der Ascheerkennung vorgesehen ist. Dabei ist es möglich, dass die Steuereinrichtung zusätzlich auch andere Aufgaben übernimmt.

Die Steuereinrichtung ist vorzugsweise eingerichtet zur Durchführung des Verfahrens, indem eine Hardwarestruktur der Steuereinrichtung in geeigneter Weise ausgebildet ist. Alternativ ist es möglich, dass ein Computerprogrammprodukt in die Steuereinrichtung geladen ist, welches Anweisungen aufweist, aufgrund derer wenigstens eines der Verfahren zur Alterungsbestimmung und Ascheerkennung in der Steuereinrichtung durchführbar ist, wenn das Computerprogrammprodukt auf der Steuereinrichtung ausgeführt wird.

Die Aufgabe wird schließlich auch gelöst, indem eine Brennkraftmaschine mit den Merkmalen des Anspruchs 14 geschaffen wird. Diese weist eine Steuereinrichtung nach einem der zuvor beschriebenen Ausführungsbeispiele auf. Damit verwirklichen sich in Zusammenhang mit der Brennkraftmaschine die Vorteile, die bereits in Zusammenhang mit der Steuereinrichtung beziehungsweise mit den Verfahren erläutert wurden.

Die Brennkraftmaschine ist vorzugsweise als Hubkolbenmotor ausgebildet. Bei einem bevorzugten Ausführungsbeispiel dient die Brennkraftmaschine dem Antrieb insbesondere schwerer Land- oder Wasserfahrzeuge, beispielsweise von Minenfahrzeugen, Zügen, wobei die Brennkraftmaschine in einer Lokomotive oder einem Triebwagen eingesetzt wird, oder von Schiffen. Auch ein Einsatz der Brennkraftmaschine zum Antrieb eines der Verteidigung dienenden Fahrzeugs, beispielsweise eines Panzers, ist möglich. Ein Ausführungsbeispiel der Brennkraftmaschine wird vorzugsweise auch stationär, beispielsweise zur stationären Energieversorgung im Notstrombetrieb, Dauerlastbetrieb oder Spitzenlastbetrieb eingesetzt, wobei die Brennkraftmaschine in diesem Fall vorzugsweise einen Generator antreibt. Auch eine stationäre Anwendung der Brennkraftmaschine zum Antrieb von Hilfsaggregaten, beispielsweise von Feuerlöschpumpen auf Bohrinseln, ist möglich. Weiterhin ist eine Anwendung der Brennkraftmaschine im Bereich der Förderung fossiler Roh- und insbesondere Brennstoffe, beispielswiese Öl und/oder Gas, möglich. Auch eine Verwendung der Brennkraftmaschine im industriellen Bereich oder im Konstruktionsbereich, beispielsweise in einer Konstruktions- oder Baumaschine, zum Beispiel in einem Kran oder einem Bagger, ist möglich. Die Brennkraftmaschine ist vorzugsweise als Dieselmotor oder als Benzinmotor ausgebildet.

Die Erfindung wird im Folgenden anhand der Zeichnung näher erläutert. Dabei zeigen:

Fig. 1    eine schematische Darstellung eines Ausführungsbeispiels einer Brennkraftmaschine;

Fig. 2    eine schematische Darstellung einer Ausführungsform des Verfahrens zur Alterungsbestimmung;

Fig. 3    eine diagrammatische Darstellung der parametrischen Abhängigkeit der Rußabbrandrate von der Alterung des Oxidationskatalysators, und

Fig. 4    eine schematische Darstellung einer Ausführungsform des Verfahrens zur Ascheerkennung.

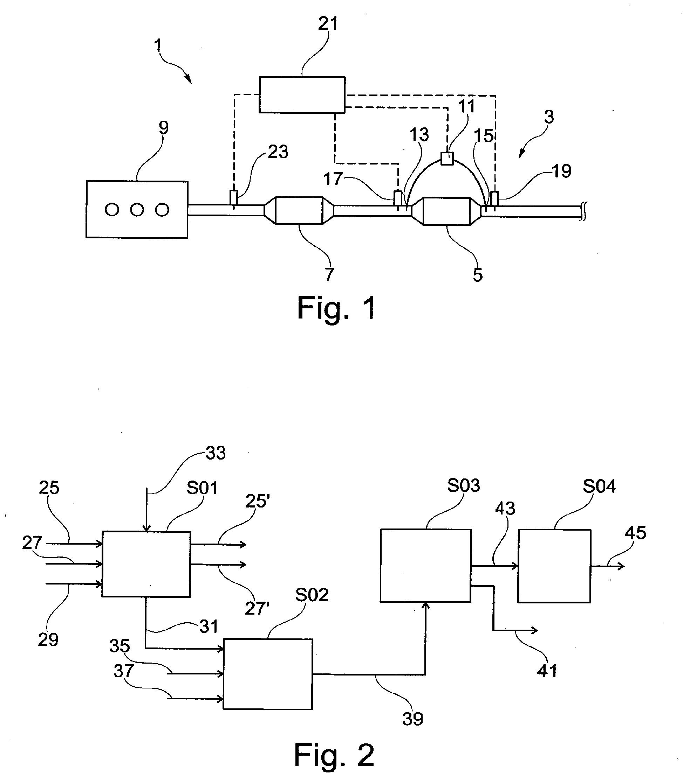

**Fig. 1** zeigt eine schematische Darstellung eines Ausführungsbeispiels einer Brennkraftmaschine 1 mit einem Abgasnachbehandlungssystem 3. Das Abgasnachbehandlungssystem 3 weist einen Partikelfilter 5 und - in Richtung einer Abgasströmung gesehen - stromaufwärts des Partikelfilters 5 einen - hier separat vorgesehenen - Oxidationskatalysator 7 auf. Das Abgas durchströmt dabei das Abgasnachbehandlungssystem 3 von einem schematisch dargestellten Motorbereich 9 zu einer in Figur 1 nicht dargestellten Abgasausstoßeinrichtung, wobei es in Figur 1 von links nach rechts strömt und zuerst den Oxidationskatalysator 7 und dann den Partikelfilter 5 passiert. Es ist zusätzlich oder alternativ zu dem separaten Oxidationskatalysator 7 möglich, dass der Partikelfilter 5 eine katalytische Beschichtung aufweist, die als Oxidationskatalysator wirkt.

Zur Erfassung eines über dem Partikelfilter 5 abfallenden Differenzdrucks ist bei dem hier dargestellten Ausführungsbeispiel ein Differenzdrucksensor 11 vorgesehen, der eine erste Messstelle 13 stromaufwärts des Partikelfilters 5 sowie eine zweite Messstelle 15 stromabwärts desselben aufweist. Der Differenzdrucksensor 11 ist eingerichtet zur Messung eines Differenzdrucks zwischen der ersten Messstelle 13 und der zweiten Messstelle 15.

Zur Bestimmung einer Temperatur des Partikelfilters 5, insbesondere des Abgases, welches den Partikelfilter 5 durchsetzt, sind stromaufwärts des Partikelfilters 5 ein erster Temperatursensor 17 und stromabwärts desselben ein zweiter Temperatursensor 19 angeordnet, die eingerichtet sind, um eine Abgastemperatur an ihrer jeweiligen Position innerhalb des Abgasnachbehandlungssystems 3 zu erfassen. Die Temperatursensoren 17, 19 sind vorzugsweise mit einer Steuereinrichtung 21 wirkverbunden, die eingerichtet ist zur Berechnung der Temperatur des Partikelfilters 5, vorzugsweise als Mittelwert der durch die Temperatursensoren 17, 19 erfassten Temperaturwerte.

Stromaufwärts des Oxidationskatalysators 7 ist in dem Abgasnachbehandlungssystem 3 ein Stickoxidsensor 23 angeordnet, der eingerichtet ist zur Erfassung einer Gesamt-Stickoxid-Konzentration in dem das Abgasnachbehandlungssystem 3 durchströmenden Abgas. Dabei spricht der Begriff Gesamt-Stickoxid-Konzentration oder auch kurz Stickoxid-Konzentration die Summe der Konzentrationen von Stickstoffmonoxid und Stickstoffdioxid in dem Abgas an. Alternativ ist es möglich, dass der Stickoxidsensor 23 eingerichtet ist zur spezifischen Erfassung einer Stickstoffmonoxid-Konzentration im Abgas. Dies führt bei der in Figur 1 dargestellten Position des Stickoxidsensors 23 höchstens zu einer geringen Abweichung des Messwerts von demjenigen eines unspezifisch auf die Stickoxid-Konzentration empfindlichen Sensors. Es zeigt sich nämlich, dass stromaufwärts des Oxidationskatalysators 7 im Wesentlichen Stickstoffmonoxid gebildet wird, welches erst in dem Oxidationskatalysator 7 teilweise zu Stickstoffdioxid oxidiert wird. Daher entspricht die Stickoxid-Konzentration an der in Figur 1 dargestellten Position des Stickoxidsensors 23 jedenfalls im Wesentlichen der Stickstoffmonoxid-Konzentration in dem Abgas.

Die Steuereinrichtung 21 ist mit dem Stickoxidsensor 23, mit den Temperatursensoren 17, 19 und mit dem Differenzdrucksensor 11 wirkverbunden. Auf diese Weise sind insbesondere Messwerte der verschiedenen Sensoren an die Steuereinrichtung 21 zur Auswertung übermittelbar. Werden bei einem anderen Ausführungsbeispiel statt des Differenzdrucksensors 11 zwei Drucksensoren verwendet, von denen einer stromaufwärts und der andere stromabwärts des Partikelfilters 5 vorgesehen ist, ist die Steuereinrichtung 21 bevorzugt mit diesen beiden Drucksensoren wirkverbunden und eingerichtet, um einen Differenzdruck aus den Messwerten der beiden Drucksensoren zu berechnen.

Die Steuereinrichtung 21 ist außerdem eingerichtet zur Ausführung eines Verfahrens zur Alterungsbestimmung des Oxidationskatalysators 7 nach einer der zuvor und im Folgenden beschriebenen Ausführungsformen. Alternativ oder zusätzlich ist die Steuereinrichtung 21 vorzugsweise ausgebildet zur Durchführung eines Verfahrens zur Ascheerkennung in dem Partikelfilter 5 nach einer der zuvor beschriebenen und im Folgenden näher erläuterten Ausführungsformen des erfindungsgemäßen Ascheerkennungsverfahrens.

**Fig. 2** zeigt eine schematische Darstellung einer Ausführungsform des Verfahrens zur Altersbestimmung des Oxidationskatalysators 7. In einem ersten Verfahrensschritt S01 wird eine Rußabbrandrate des Partikelfilters 5 ermittelt. Hierbei werden als Eingangswerte für den ersten Verfahrensschritt S01 der vorzugsweise mittels des Differenzdrucksensors 11 ermittelte Differenzdruck 25, der über dem Partikelfilter 5 abfällt, eine anhand eines Beladungsmodells aus dem Differenzdruck berechnete Beladung 27 des Partikelfilters 5 und eine vorzugsweise von der Steuereinrichtung 21 anhand wenigstens eines Betriebsparameters der Brennkraftmaschine 1 berechnete Rußeintragsrate 29 verwendet. Es ist möglich, dass nur die Beladung 27 und die Rußeintragsrate 29 als Eingangswerte für den Schritt S01 verwendet werden. Insoweit ist es nicht zwingend erforderlich, auch den Differenzdruck 25 explizit für den ersten Schritt S01 heranzuziehen. Vielmehr kann es genügen, dass in einem vorgelagerten Schritt die Beladung 27 anhand des Beladungsmodells aus dem Differenzdruck 25 berechnet wird. Wird allerdings der Differenzdruck 25 explizit in den ersten Schritt S01 eingeführt, kann dieser geglättet und/oder gefiltert werden, sodass aus dem ersten Schritt S01 als ein Ergebnis ein geglätteter und/oder gefilterter Differenzdruck 25' resultiert. In gleicher Weise resultiert aus dem ersten Schritt S01 vorzugsweise als Ergebnis auch eine geglättete und/oder gefilterte Beladung 27', insbesondere eine Beladung 27', die auf der Grundlage des geglätteten und/oder gefilterten Differenzdrucks 25' berechnet ist.

In dem Schritt S01 wird aus den Eingangswerten, insbesondere aus der Beladung 27 und der Rußeintragsrate 29, eine Rußabbrandrate 31 berechnet. Diese wird einem zweiten Schritt S02 des Verfahrens als Eingangswert zugeführt.

Der erste Schritt S01 wird vorzugsweise durch einen Kalman-Filter durchgeführt. Dies ist eine insbesondere für Berechnungen in Echtzeit besonders geeignete Methode, um schnell und mit möglichst wenig Rechenleistung eine zuverlässige und genaue Berechnung der Rußabbrandrate zu ermöglichen. Alternativ ist es möglich, dass die Rußabbrandrate in dem ersten Schritt S01 durch Rückwärtsintegration aus der Beladung 27 und der Rußeintragsrate 29 berechnet wird.

Insbesondere wenn in dem Schritt S01 ein Kalman-Filter verwendet wird, geht in diesen als weiterer Eingangswert bevorzugt ein Fehlerschätzwert 33 ein. Es ist möglich, dass mehr als ein Fehlerschätzwert 33 in den ersten Schritt S01 eingeht. Der Fehlerschätzwert 33 berücksichtigt vorzugsweise einen Fehler in der Messung des Differenzdrucksensors 11 beziehungsweise allgemein des Differenzdrucks, wobei dieser Fehler typischerweise abhängig vom Betriebspunkt der Brennkraftmaschine 1 ist. Insbesondere in transienten Zuständen der Brennkraftmaschine 1 ist der Fehler in der Messung des Differenzdrucks typischerweise größer als in stationären Betriebspunkten. Zusätzlich oder alternativ erlaubt der Fehlerschätzwert 33 vorzugsweise eine Gewichtung der in den ersten Schritt S01 eingehenden Eingangswerte, wobei es abhängig von der zu erwartenden Aussagekraft oder Genauigkeit der Eingangswerte möglich ist, dass die Rußabbrandrate 31 zeitweise nicht unmittelbar aus den momentan anliegenden Eingangswerten berechnet, sondern vielmehr anhand der zuvor berechneten Werte extrapoliert wird. Dies ist in besonders geeigneter Weise möglich, wenn in dem ersten Schritt S01 ein Kalman-Filter verwendet wird, bei dem die Berechnung der Rußabbrandrate 31 bei vorliegend stark fehlerbehafteten oder wenig aussagekräftigen Eingangswerten zu internen Zuständen verschoben werden kann. Dies erfolgt wiederum bevorzugt in einem transienten Betriebszustand der Brennkraftmaschine 1.

In dem zweiten Schritt S02 gehen neben der Rußabbrandrate 31 als weitere Eingangswerte noch die vorzugsweise mithilfe der Temperatursensoren 17, 19 ermittelte Temperatur 35 in dem Partikelfilter 5 und die vorzugsweise mithilfe des Stickoxidsensors 23 ermittelte Stickoxid-Konzentration 37 im Abgas ein. In dem zweiten Schritt S02 wird nun die Rußabbrandrate 31 in Abhängigkeit von der Temperatur 35 und der Stickoxid-Konzentration 37 ausgewertet, wobei an die Rußabbrandrate 31 eine Funktion durch Variation von wenigstens einem Anpassungsparameter angepasst wird. Zur Anpassung der Funktion wird vorzugsweise die Methode der kleinsten Federquadrate oder eine andere geeignete Methode verwendet. Bevorzugt wird an die Rußabbrandrate 31 eine lineare Funktion, ein Polynom zweiten Grades, oder ein Polynom dritten Grades angepasst. Es ist demnach möglich, dass mehr als ein Anpassungsparameter zur Anpassung der Funktion an die Rußabbrandrate 31 variiert wird.

Wird eine Funktion mit nur einem Anpassungsparameter verwendet, resultiert aus deren Anpassung an die Rußabbrandrate 31 in dem zweiten Schritt S02 genau ein Wert für den Anpassungsparameter, andernfalls resultiert aus dem zweiten Schritt S02 ein Satz von Werten verschiedener Anpassungsparameter. Diese Fälle werden hier gemeinsam betrachtet, wobei schematisch dargestellt ist, dass aus dem zweiten Schritt S02 als Ergebnis ein Anpassungsparameter 39 resultiert, bei dem es sich also insoweit um einen einzelnen Wert oder um eine Schar beziehungsweise einen Satz von verschiedenen Werten handeln kann.

In einem dritten Schritt S03 des Verfahrens wird der Anpassungsparameter 39 ausgewertet, und die Alterung des Oxidationskatalysators 7 wird anhand des Anpassungsparameters 39 bestimmt. Hierzu wird dieser vorzugsweise mit wenigstens einem Kennwert, besonders bevorzugt einer Mehrzahl von Schwell- oder Grenzwerten, oder mit einem Kennfeld verglichen. Entsprechend resultiert aus dem dritten Schritt S03 als Ergebnis eine Alterung 41 des Oxidationskatalysators 7. Diese kann für weitere Verfahren, insbesondere zur Ascheerkennung oder Aschekorrektur des Partikelfilters 5, verwendet werden.

Vorzugsweise wird in dem dritten Schritt S03 auch eine zeitliche Entwicklung der Rußabbrandrate 43 ausgewertet, wobei insbesondere die zeitliche Entwicklung des Anpassungsparameters 39 berechnet wird. Aus der zeitlichen Entwicklung der Rußabbrandrate 43 ist es in einem vierten Schritt S04 bevorzugt möglich, eine Fehlererkennung durchzuführen, und insbesondere eine normale, langsame Alterung des Oxidationskatalysators 7 von einer plötzlichen Veränderung, beispielsweise durch dessen Zerstörung, oder aber auch durch einen Sensorfehler, zu unterscheiden. Besonders bevorzugt ist es anhand des spezifischen Verlaufs der zeitlichen Entwicklung 43 möglich, verschiedene spezifische Fehler voneinander zu unterscheiden. Insoweit resultiert aus dem vierten Schritt S04 bevorzugt als Ergebnis ein Zustand 45 des Abgasnachbehandlungssystems 3, der darüber Auskunft gibt, ob dieses fehlerfrei funktioniert, oder ob ein Fehler, beispielsweise eine Zerstörung des Oxidationskatalysators 7 oder ein Sensorfehler, vorliegt. Der Zustand 45 kann dann beispielsweise verwendet werden, um einen Warnhinweis an einen Betreiber der Brennkraftmaschine 1 auszugeben und/oder um Maßnahmen zur Behebung des Fehlers einzuleiten. Es ist auch möglich, dass aufgrund einer Auswertung des Zustands 45 die Brennkraftmaschine 1 stillgelegt wird, um deren Zerstörung oder Beschädigung zu verhindern.

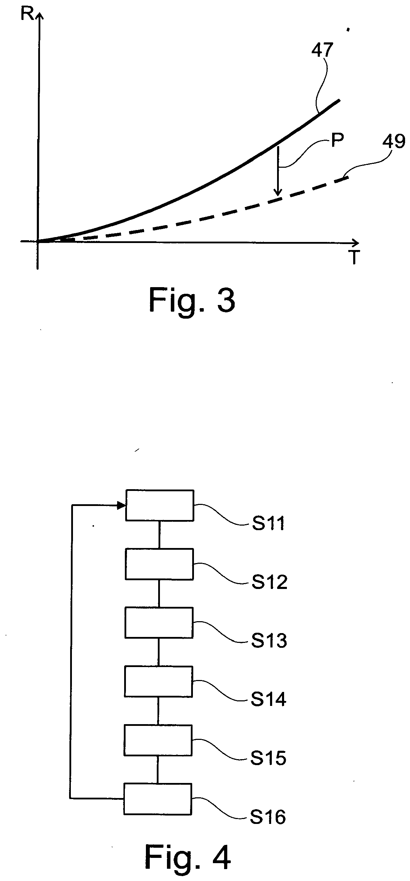

**Fig. 3** zeigt eine schematische und diagrammatische Darstellung der Rußabbrandrate R in ihrer parametrischen Abhängigkeit von dem Alter des Oxidationskatalysators. Der einfacheren Darstellung wegen ist hier die Rußabbrandrate R nicht sowohl in Abhängigkeit der Stickoxid-Konzentration und der Abgastemperatur T aufgetragen, sondern vielmehr nur in Abhängigkeit der Abgastemperatur T, woraus eine anschauliche, zweidimensionale Betrachtung resultiert. Dabei ist als durchgezogene Kurve 47 die Rußabbrandrate R bei festgehaltener Stickoxid-Konzentration gegen die Temperatur T des Abgases in dem Partikelfilter 5 aufgetragen, wobei der Verlauf der durchgezogenen Kurve 47 einem Neuzustand des Oxidationskatalysators 7 entspricht. Der Effekt der Alterung des Oxidationskatalysators 7 ist hier durch einen Pfeil P dargestellt, wobei eine gestrichelte Kurve 49 dem entsprechenden Verlauf der Rußabbrandrate R bei festgehaltener Stickoxid-Konzentration in Abhängigkeit der Abgastemperatur T in dem Partikelfilter 5 für einen gealterten Oxidationskatalysator 7 entspricht. Die Alterung des Oxidationskatalysators 7 macht sich dadurch bemerkbar, dass Stickstoffmonoxid nur noch in verringertem Maße zu Stickstoffdioxid umgesetzt wird, sodass das Verhältnis der Stickstoffdioxid-Konzentration zur gesamten Stickoxid-Konzentration mit zunehmender Alterung des Oxidationskatalysators abnimmt. Entsprechend nimmt - wie durch den Pfeil P dargestellt - auch die Rußabbrandrate ab, beziehungsweise sie zeigt aufgetragen gegen die Temperatur bei festgehaltener Stickoxid-Konzentration einen flacheren Verlauf.

Die Rußabbrandrate wird vorzugsweise angepasst mit einer linearen Funktion, einem Polynom zweiten Grades, oder einem Polynom dritten Grades, wobei insbesondere ein Polynom dritten Grades der Form:

$$R([NO_x], T; a, b, c) = a[NO_x](T - T_0) + b[NO_x](T - T_0)^2 + c[NO_x](T - T_0)^3 \qquad (1)$$

verwendet wird. Dabei ist $[NO_x]$ die Stickoxid-Konzentration, T ist die Temperatur des Abgases in dem Partikelfilter 5, und $T_0$ ist ein Offset-Parameter, durch den berücksichtigt wird, dass unterhalb einer bestimmten Temperatur nahezu kein Rußabbrand mehr stattfindet. Dabei handelt es sich bei dem Offset-Parameter $T_0$ um eine Temperatur, unterhalb der die Rußabbrandrate R nahezu Null ist. Vorzugsweise beträgt die Offset-Temperatur $T_0$ von mindestens 200 °C bis höchstens 300 °C, besonders bevorzugt 250 °C. Die Parameter a, b und c sind Anpassungsparameter, die im Rahmen des Verfahrens variiert werden, um die Funktion gemäß der Gleichung (1) an den Verlauf der Rußabbrandrate R anzupassen.

Wird statt des Polynoms dritten Grades gemäß Gleichung (1) ein Polynom zweiten Grades verwendet, entfällt bevorzugt im Vergleich zur Gleichung (1) einfach der dritte Term, der den Parameter c aufweist. Insoweit sind dann nur noch die Parameter a, b zu variieren. Wird eine lineare Funktion verwendet, weist diese bevorzugt nur den ersten Term von Gleichung (1) auf, sodass nur noch der Anpassungsparameter a variiert wird.

Wird die Funktion gemäß Gleichung (1) an die Rußabbrandrate angepasst, resultieren aus der Anpassung Werte für die Anpassungsparameter a, b, c, welche dann als Wertesatz beziehungsweise Anpassungsparameter 39 in dem dritten Schritt S03 gemäß Figur 2 weiterverwendet werden, um die Alterung 41 des Oxidationskatalysators 7 zu bestimmen und/oder die zeitliche Entwicklung 43 der Rußabbrandrate 31 zu ermitteln.

Aus Figur 3 ist jedenfalls offensichtlich, dass es sich bei der Temperatur des Abgases in dem Partikelfilter 5 um eine Größe handelt, für welche ein Wert der Anpassungsparameter a, b, c von einer Alterung des Oxidationskatalysators 7 abhängt. Entsprechendes gilt für die Stickoxid-Konzentration [NO$_x$], und insbesondere für eine Kombination der Temperatur in dem Partikelfilter 5 einerseits und der Stickoxid-Konzentration [NO$_x$] andererseits. Somit sind die Werte der Anpassungsparameter a, b, c charakteristisch für den Alterungszustand des Oxidationskatalysators 7, sodass dieser anhand der entsprechenden Werte ohne weiteres ermittelt werden kann. Dies ist in jedem Betriebszustand der Brennkraftmaschine 1 möglich, bei welchem die Abgastemperatur in dem Partikelfilter 5 in einem Bereich liegt, in welchem der Rußabbrand zumindest im Wesentlichen, vorzugsweise vollständig, durch Reaktion der Rußpartikel mit Stickstoffdioxid als Oxidationsmittel erfolgt. Ein Temperaturbereich, der diese Bedingung erfüllt, beträgt erfindungsgemäß mindestens 150 °C bis höchstens 500 °C, bevorzugt von mindestens 250 °C bis höchstens 450 °C.

In einem Temperaturbereich des Abgases in dem Partikelfilter 5, bei welchem die Regeneration im Wesentlichen unabhängig von der Stickstoffdioxid-Konzentration ist, insbesondere also bei Nennleistung der Brennkraftmaschine und hohen Abgastemperaturen, insbesondere oberhalb von 450 °C, ist die hier skizzierte Alterungsbestimmung kaum oder nicht möglich. Dafür kann in entsprechenden Betriebszuständen allerdings eine Ascheerkennung nach einer herkömmlichen Methode durchgeführt werden, weil die Regenerationsrate hier nicht von der Alterung des Oxidationskatalysators abhängt. Besonders bevorzugt wird daher im Betrieb der Brennkraftmaschine 1 das erfindungsgemäße Verfahren zur Alterungsbestimmung des Oxidationskatalysators mit einem herkömmlichen Verfahren zur Ascheerkennung kombiniert. Auf diese Weise können komplementäre Informationen über den Zustand des Abgasnachbehandlungssystems 3 erhalten werden, welche die Genauigkeit sowohl der Ascheerkennung als auch der Alterungsbestimmung des Oxidationskatalysators steigern.

**Fig. 4** zeigt eine schematische Darstellung einer Ausführungsform des erfindungsgemäßen Verfahrens zur Ascheerkennung nach Art eines Flussdiagramms. Dabei wird in einem ersten Schritt S11 ein über dem Partikelfilter 5 abfallender Differenzdruck erfasst. In einem zweiten Schritt S12 wird eine Alterung des Oxidationskatalysators 7 mithilfe einer der Ausführungsformen des zuvor beschriebenen Verfahrens bestimmt.

In einem dritten Schritt S13 wird ein Beladungsmodell an die Alterung des Oxidationskatalysators 7 angepasst.

In einem vierten Schritt S14 wird eine Beladung des Partikelfilters 5 anhand des korrigierten Beladungsmodells bestimmt, wobei in einem fünften Schritt S15 eine Veraschung des Partikelfilters aus der anhand des korrigierten Beladungsmodells berechneten Beladung einerseits und dem Differenzdruck andererseits bestimmt wird.

Schließlich wird das Beladungsmodell vorzugsweise in einem sechsten Schritt S16 an die festgestellte Veraschung des Partikelfilters 5 angepasst.

Vorzugsweise wird das Verfahren iterativ durchgeführt, sodass es nach dem Ende des sechsten Schritts S16 erneut in dem ersten Schritt S11 startet.

Es ist möglich, dass das Verfahren insbesondere bei einem ersten Durchlauf bei Verwendung eines neuen oder von Asche gereinigten Partikelfilters 5 mit einem Initialwert für die Veraschung initialisiert wird, sodass insoweit die Veraschung in dem fünften Schritt S15 dann nicht bestimmt wird, sondern vielmehr der Initialwert verwendet wird. Alternativ oder zusätzlich ist es möglich, dass - vorzugsweise in regelmäßigen Abständen - eine Ascheerkennung nach einem bekannten Verfahren in einem Betriebszustand durchgeführt wird, in welchem sich die Alterung des Oxidationskatalysators nicht auf den Rußabbrand auswirkt, wobei dann bevorzugt in dem fünften Schritt S15 ein im Rahmen des herkömmlichen Ascheerkennungsverfahrens ermittelter Wert für die Veraschung statt des dort im Rahmen des hier vorgeschlagenen Ascherkennungsverfahrens ermittelten Werts verwendet wird. Dies kann gegebenenfalls die Genauigkeit des Verfahrens insgesamt steigern. Es ist möglich, nicht Gegenstand der Erfindung, dass in Betriebszuständen, in denen die Alterung des Oxidationskatalysators für den Rußabbrand irrelevant ist, eine Ascheerkennung nach einem herkömmlichen Verfahren durchgeführt wird, während in allen anderen Betriebszuständen das Verfahren in der hier erfindungsgemäß vorgeschlagenen Form durchgeführt wird.

Insgesamt zeigt sich so, dass es mithilfe der hier erfindungsgemäß vorgeschlagenen Verfahren, der Steuereinrichtung und der Brennkraftmaschine möglich ist, die Effekte einer Veraschung des Partikelfilters 5 einerseits und einer Alterung des Oxidationskatalysators 7 andererseits auf den Anstieg des Differenzdruckniveaus über dem Partikelfilter 5 zu separieren und dadurch insbesondere einerseits zu einer Alterungsbestimmung für den Oxidationskatalysator 7 und andererseits zu einer verbesserten Vorhersage der Rußbeladung des Partikelfilters 5 zu gelangen.

**Patentansprüche**

1.  Verfahren zur Alterungsbestimmung eines Oxidationskatalysators (7) in einem Abgasnachbehandlungssystem (3) einer Brennkraftmaschine (1), mit folgenden Schritten:

    - Ermitteln einer Rußabbrandrate (31) eines Partikelfilters (5) des Abgasnachbehandlungssystems (3);
    - Anpassen einer Funktion mit wenigstens einem Anpassungsparameter (39) an die Rußabbrandrate (31) in Abhängigkeit von wenigstens einer Größe, für welche ein Wert des Anpassungsparameters (39) von einer Alterung des Oxidationskatalysators (7) abhängig ist, wobei eine Abgastemperatur im Partikelfilter (5) in einem Temperaturbereich von 150 °C bis 500 °C liegt, und
- Bestimmen der Alterung des Oxidationskatalysators (7) anhand des durch Anpassen der Funktion ermittelten Werts des Anpassungsparameters (39).

2. Verfahren nach Anspruch 1, **dadurch gekennzeichnet, dass** die Alterung des Oxidationskatalysators (7) bestimmt wird, indem der wenigstens eine Anpassungsparameter (39) mit wenigstens einem vorherbestimmten Kennwert verglichen wird.

3. Verfahren nach einem der vorhergehenden Ansprüche, **dadurch gekennzeichnet, dass** die Funktion an die Rußabbrandrate in Abhängigkeit von einer Temperatur (T) des Partikelfilters (5) und einer Stickoxid-Konzentration im Abgas angepasst wird.

4. Verfahren nach einem der vorhergehenden Ansprüche, **dadurch gekennzeichnet, dass** eine lineare Funktion, ein Polynom zweiten Grades oder ein Polynom dritten Grades an die Rußabbrandrate angepasst wird.

5. Verfahren nach einem der vorhergehenden Ansprüche, **dadurch gekennzeichnet, dass** die Rußabbrandrate (31) durch folgende Schritte ermittelt wird:

   - Ermitteln eines über dem Partikelfilter (5) abfallenden Differenzdrucks (25);
   - Ermitteln einer Beladung (27) des Partikelfilters (5) aus dem Differenzdruck (25) anhand eines Beladungsmodells;
   - Ermitteln eines Rußeintrags (29) in den Partikelfilter (5), und
   - Ermitteln der Rußabbrandrate (31) aus der Beladung (27) und dem Rußeintrag (29).

6. Verfahren nach Anspruch 5, **dadurch gekennzeichnet, dass** die Rußabbrandrate (31) mithilfe eines Kalman-Filters ermittelt wird.

7. Verfahren nach einem der vorhergehenden Ansprüche, **dadurch gekennzeichnet, dass** eine zeitliche Entwicklung (43) der Rußabbrandrate (31) ausgewertet wird, wobei anhand der zeitlichen Entwicklung (43) der Rußabbrandrate (31) eine Fehlererkennung durchgeführt wird.

8. Verfahren nach Anspruch 7, **dadurch gekennzeichnet, dass** die zeitliche Entwicklung (43) des wenigstens einen Anpassungsparameters (39) ausgewertet wird.

9. Verfahren zur Ascherkennung in einem Partikelfilter (5) eines Abgasnachbehandlungssystems (3) mit folgenden Schritten:

   - Erfassen eines über dem Partikelfilter (5) abfallenden Differenzdrucks;
   - Bestimmen einer Alterung eines Oxidationskatalysators (7) des Abgasnachbehandlungssystems (3) durch ein Verfahren nach einem der Ansprüche 1 bis 8;
   - Anpassen eines Beladungsmodells an die Alterung des Oxidationskatalysators (7);
   - Bestimmen einer Beladung (27) des Partikelfilters (5) anhand des korrigierten Beladungsmodells, und
   - Bestimmen einer Veraschung des Partikelfilters (5) aus der Beladung (27) und dem Differenzdruck (25).

10. Verfahren nach Anspruch 9, **dadurch gekennzeichnet, dass** das Beladungsmodell an die Veraschung des Partikelfilters (5) angepasst wird.

11. Verfahren nach einem der Ansprüche 9 und 10, **dadurch gekennzeichnet, dass** das Verfahren mit einem Initialwert für die Veraschung des Partikelfilters (5) initialisiert wird.

12. Verfahren nach einem Ansprüche 9 bis 11, **dadurch gekennzeichnet, dass** das Verfahren iterativ durchgeführt wird.

13. Steuereinrichtung für eine Brennkraftmaschine (1), eingerichtet zur Durchführung eines Verfahrens nach einem der Ansprüche 1 bis 8 und/oder zur Durchführung eines Verfahrens nach einem der Ansprüche 9 bis 12.

14. Brennkraftmaschine (1), mit einer Steuereinrichtung (21) nach Anspruch 13.

**Claims**

1. Method for determining the aging of an oxidation catalyst (7) in an exhaust gas aftertreatment system (3) of an internal combustion engine (1), having the following steps:

   - obtaining a soot burn-off rate (31) of a particle filter (5) of the exhaust gas aftertreatment system (3);
   - adapting a function with at least one adaptation parameter (39) to the soot burn-off rate (31) as a function of at least one variable for which a value of the adaptation parameter (39) is dependent on aging of the oxidation catalyst (7), wherein an exhaust gas temperature in the particle filter (5) is in a temperature range from 150°C to 500°C, and
   - determining the aging of the oxidation catalyst (7) on the basis of the value of the adaptation parameter (39) which is obtained by adapting the function.

2. Method according to Claim 1, **characterized in that** the aging of the oxidation catalyst (7) is determined by comparing the at least one adaptation parameter (39) with at least one previously determined characteristic value.

3. Method according to one of the preceding claims, **characterized in that** the function is adapted to the soot burn-off rate as a function of a temperature (T) of the particle filter (5) and a nitrogen oxide concentration in the exhaust gas.

4. Method according to one of the preceding claims, **characterized in that** a linear function, a second degree polynomial or a third degree polynomial is adapted to the soot burn-off rate.

5. Method according to one of the preceding claims, **characterized in that** the soot burn-off rate (31) is obtained by means of the following steps:

   - obtaining a differential pressure (25) which drops across the particle filter (5);
   - obtaining a load (27) of the particle filter (5) from the differential pressure (25) using a loading model;
   - obtaining a soot input (29) into the particle filter (5), and
   - obtaining the soot burn-off rate (31) from the load (27) and the soot input (29).

6. Method according to Claim 5, **characterized in that** the soot burn-off rate (31) is obtained using a Kalman filter.

7. Method according to one of the preceding claims, **characterized in that** a development (43) of the soot burn-off rate (31) over time is evaluated, error detection being carried out using the development (43) of the soot burn-off rate (31) over time.

8. Method according to Claim 7, **characterized in that** the development (43) of the at least one adaptation parameter (39) over time is evaluated.

9. Method for detecting ash in a particle filter (5) of an exhaust gas aftertreatment system (3) having the following steps:

   - detecting a differential pressure which drops across the particle filter (5);
   - determining aging of an oxidation catalyst (7) of the exhaust gas aftertreatment system (3) by means of a method according to one of claims 1 to 8;
   - adapting a loading model to the aging of the oxidation catalyst (7);
   - determining a load (27) of the particle filter (5) using the corrected loading model, and
   - determining depositing of ash on the particle filter (5) from the load (27) and the differential pressure (25).

10. Method according to Claim 9, **characterized in that** the loading model is adapted to the depositing of ash on the particle filter (5).

11. Method according to one of Claims 9 and 10, **characterized in that** the method is initialized with an initial value for the depositing of ash on the particle filter (5).

12. Method according to one of Claims 9 to 11, **characterized in that** the method is carried out iteratively.

13. Control device for an internal combustion engine (1), configured to carry out a method according to one of Claims 1 to 8 and/or to carry out a method according to one of Claims 9 to 12.

**14.** Internal combustion engine (1), having a control device (21) according to Claim 13.

**Revendications**

**1.** Procédé pour la détermination du vieillissement d'un catalyseur d'oxydation (7) dans un système de post-traitement de gaz d'échappement (3) d'un moteur à combustion interne (1), comprenant les étapes suivantes :

- détermination d'un taux de décalaminage de la suie (31) d'un filtre à particules (5) du système de post-traitement de gaz d'échappement (3) ;
- adaptation d'une fonction avec au moins un paramètre d'adaptation (39) au taux de décalaminage de la suie (31) en fonction d'au moins une grandeur pour laquelle une valeur du paramètre d'adaptation (39) dépend d'un vieillissement du catalyseur d'oxydation (7), une température du gaz d'échappement dans le filtre à particules (5) étant comprise dans une plage de température de 150° C à 500° C, et
- détermination du vieillissement du catalyseur d'oxydation (7) à l'aide de la valeur du paramètre d'adaptation (39) déterminée par adaptation de la fonction.

**2.** Procédé selon la revendication 1, **caractérisé en ce que** le vieillissement du catalyseur d'oxydation (7) est déterminé en comparant l'au moins un paramètre d'adaptation (39) avec au moins une valeur caractéristique prédéterminée.

**3.** Procédé selon l'une quelconque des revendications précédentes, **caractérisé en ce que** la fonction est adaptée au taux de décalaminage de la suie en fonction d'une température (T) du filtre à particules (5) et d'une concentration en oxydes d'azote dans le gaz d'échappement.

**4.** Procédé selon l'une quelconque des revendications précédentes, **caractérisé en ce qu'**une fonction linéaire, un polynôme du deuxième degré ou un polynôme du troisième degré est adapté au taux de décalaminage de la suie.

**5.** Procédé selon l'une quelconque des revendications précédentes, **caractérisé en ce que** le taux de décalaminage de la suie (31) est déterminé par les étapes suivantes :

- détermination d'une pression différentielle (25) chutant de part et d'autre du filtre à particules (5) ;
- détermination d'une charge (27) du filtre à particules (5) à partir de la pression différentielle (25) à l'aide d'un modèle de charge ;
- détermination d'une introduction de suie (29) dans le filtre à particules (5), et
- détermination du taux de décalaminage de la suie (31) à partir de la charge (27) et de l'introduction de suie (29).

**6.** Procédé selon la revendication 5, **caractérisé en ce que** le taux de décalaminage de la suie (31) est déterminé à l'aide d'un filtre Kalman.

**7.** Procédé selon l'une quelconque des revendications précédentes, **caractérisé en ce qu'**une évolution dans le temps (43) du taux de décalaminage de la suie (31) est analysée, une détection d'erreur étant effectuée à l'aide de l'évolution dans le temps (43) du taux de décalaminage (31) de la suie.

**8.** Procédé selon la revendication 7, **caractérisé en ce que** l'évolution dans le temps (43) de l'au moins un paramètre d'adaptation (39) est analysée.

**9.** Procédé de détection de suie dans un filtre à particules (5) d'un système de post-traitement de gaz d'échappement (3), comprenant les étapes suivantes :

- détection d'une pression différentielle chutant de part et d'autre du filtre à particules (5) ;
- détermination d'un vieillissement d'un catalyseur d'oxydation (7) du système de post-traitement de gaz d'échappement (3) par un procédé selon l'une quelconque des revendications 1 à 8 ;
- adaptation d'un modèle de charge au vieillissement du catalyseur d'oxydation (7) ;
- détermination d'une charge (27) du filtre à particules (5) à partir du modèle de charge corrigé, et
- détermination d'une calcination du filtre à particules (5) à partir de la charge (27) et de la pression différentielle (25).

**10.** Procédé selon la revendication 9, **caractérisé en ce que** le modèle de charge est adapté à la calcination du filtre à particules (5).

**11.** Procédé selon l'une quelconque des revendications 9 et 10, **caractérisé en ce que** le procédé est amorcé avec une valeur initiale pour la calcination du filtre à particules (5).

**12.** Procédé selon l'une quelconque des revendications 9 à 11, **caractérisé en ce que** le procédé est effectué de manière itérative.

**13.** Dispositif de commande pour un moteur à combustion interne (1) prévu pour mettre en oeuvre un procédé selon l'une quelconque des revendications 1 à 8 et/ou pour mettre en oeuvre un procédé selon l'une quelconque des revendications 9 à 12.

**14.** Moteur à combustion interne (1) comprenant un dispositif de commande (21) selon la revendication 13.

Fig. 1

Fig. 2

Fig. 3

Fig. 4

**IN DER BESCHREIBUNG AUFGEFÜHRTE DOKUMENTE**

**In der Beschreibung aufgeführte Patentdokumente**

- WO 2013185862 A1
- WO 2008133694 A1